# EUROPEAN PATENT APPLICATION

(11) **EP 1 067 759 A2**
(43) Date of publication of application: **10.01.2001**
(21) Application number: 00113034.3
(22) Date of filing: 21.06.2000
(51) Int. Cl.: H04N 1/32

(54) **Image data transmission apparatus, image data receiving apparatus, and medium**

(30) Priority: 23.06.1999 JP 17695899
(71) Applicant: RISO KAGAKU CORPORATION, Tokyo (JP)
(72) Inventor: Nakano, Kazuo, Riso Kagaku Corp., R&D Center, Inashiki-gun, Ibaraki-ken (JP); Hayashi, Katsuyoshi, Riso Kagaku Corp., R&D Center, Inashiki-gun, Ibaraki-ken (JP); Hibara, Toru, Riso Kagaku Corp., R&D Center, Inashiki-gun, Ibaraki-ken (JP)
(74) Representative: HOFFMANN - EITLE

(57) **Abstract**

An image data transmission apparatus transmitting image data to a transmission destination through a communication circuit includes a transmission section transmitting the image data; and a controller performing control of the transmission section so that the image data is transferred to the transmission destination indicated by a transfer data corresponding to the image data, based on occurrence that the image data is specified. Here, an image data transfer medium used for image data transfer to a transmission destination through a communication circuit from an image data transmission apparatus includes a data structure has the image data and transfer data corresponding to it. At this point, the image data and the transfer data are associated with one another as a pair. Besides, an image data receiving apparatus receiving image data from an image data transmission apparatus through a communication circuit includes: a receiving section receiving the image data; and a controller which, when a verification destination for notification of completion of image data transfer is included in a transfer data corresponding to the image data, issues notification to the verification destination after reception of the image data by the receiving section is completed. Further, onto a storage medium, an image data transfer program, which transfers the image data for transmitting the image data to the transmission destination indicated by transfer data corresponding to the image data based on occurrence that the image data is specified, is stored.

## Description

### BACKGROUND OF THE INVENTION

The present invention relates to an image data transmission apparatus, an image data receiving apparatus, and an associated medium, and more particularly to an image data transmission apparatus which transmits generated printing data by communication with respect to a remotely located printer, to an image data transfer medium installed and used at the transmission apparatus when transfer is done, to a storage medium which stores an image transfer program, and to an image data receiving apparatus.

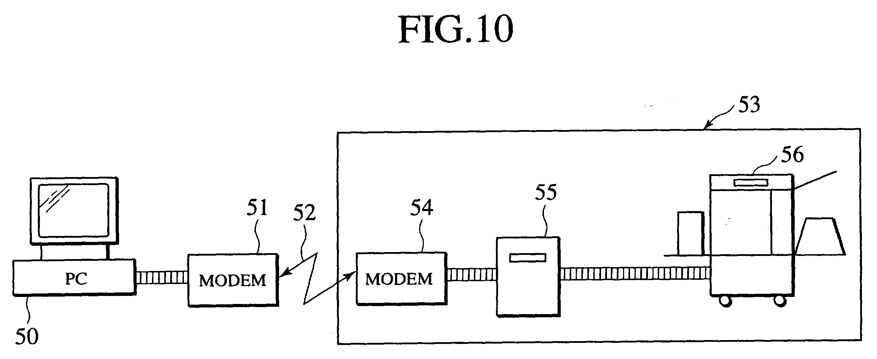

Fig. 10 shows the configuration of an image data transfer system which evolved from a study made by the inventors of the present invention.

A business exists in which printed matter such as pamphlets that are ordered at a plurality of shops in remote locations are printed remotely at a central printing location, and returned to the local shop.

In this form of operation, it can be envisioned that a system such as shown in Fig. 10 is used to generate data from images and transfer this data.

An image data generation apparatus 50, such as a personal computer, is installed at a remote shop.

Image data that is generated by the image data generation apparatus 50 is transferred to a printing apparatus 53 at the central printing location, through a modem 51 connected to the personal computer over a public communication circuit 52.

The printing apparatus 53 is formed by a modem 54 connected to the public communication circuit 52, an interface device 55, such as a print controller, and a printer 56.

Image data that is sent to the printing apparatus 53 is received by the modem 54, the received image data being converted by the interface device 55 to data that is printable by the printer 56 and then output to the printer 56.

### SUMMARY OF THE INVENTION

However, because it might not be possible to connect to the public communication circuit 52 at all times, and because it might not be possible at any time to make transfer data because of the need for preparation, for example, at the printing location, there are cases in which transmission is made at a later date.

Additionally, there are cases in which retransmission is required for such reasons as problems with the public communication circuit 52, or accidental deletion of image data to be sent.

In such cases in a system such as shown in Fig. 10, because that configuration is one in which there is direct transfer of image data from the image data generation apparatus 50, reliable operation of the image data generation, apparatus is required. For example, if this apparatus is implemented using a general-purpose personal computer, complicated operation is required in order to perform transmission. Thus, if an inexperienced person is operating the apparatus, as could happen, for example, at night, there is a possibility of deleting or losing data, or failing to send the data. To avoid this kind of problem, it is necessary to provide highly trained personnel for performing data transfer.

Another problem is the trouble involved in verifying that image data has been properly transmitted and received. Specifically, it is necessary to first display the image data on the screen of the personal computer or the like connected to the modem 54 so as to perform a visual verification of received image data, and then contact the shop to give notification that the image data has indeed been sent and received properly. This involves a person at the shop waiting for telephone verification of proper image data transmission and reception, thereby interfering with the usual operations of the shop.

Accordingly, it is an object of the present invention to provide an image data transmission apparatus which enables useful and sure transfer of image data to a remote location and verification of the transmission, to further provide a data image transfer medium used in the above-noted data transmission apparatus, a storage medium in which is stored an image data transfer program, and an image data receiving apparatus.

An image data transmission apparatus transmitting image data to a transmission destination through a communication circuit according to the present invention, comprises: a transmission section transmitting the image data; and a controller performing control of the transmission section so that the image data is transferred to the transmission destination indicated by a transfer data corresponding to the image data, based on occurrence that the image data is specified.

In another aspect also, an image data transmission apparatus transmitting image data to a transmission destination through a communication circuit according to the present invention, comprises: a reading section, in which an image data transfer medium is installable and removable, reading contents of the image data transfer medium, the contents thereof being stored on the image data transfer medium and including the image data and transfer data corresponding thereto, and the image data and the transfer data corresponding thereto being associated with one another as a pair; a transmission section transmitting the image data; and a controller that, by detecting that the image data transfer medium is installed in the reading section, performs control so that the image data is transferred to the transmission destination indicated by the transfer data corresponding to the image data.

Here, an image data transfer medium used for image data transfer to a transmission destination through a communication circuit from an image data transmission apparatus according to the present invention, comprises: a data structure stored on the image data transfer medium and including the image data and transfer data corresponding thereto, the image data and the transfer data being associated with one another as a pair.

Also, an image data receiving apparatus receiving image data from an image data transmission apparatus through a communication circuit according to the present invention, comprises: a receiving section receiving the image data; and a controller which, when a verification destination for notification of completion of image data transfer is included in a transfer data corresponding to the image data, issues notification to the verification destination after reception of the image data by the receiving section is completed, thereby giving reception verification.

And also, in a storage medium according to the present invention, an image data transfer program transferring the image data for transmitting the image data to the transmission destination indicated by transfer data corresponding to the image data based on a specification of the image data, is stored. That is, a computer program product transferring image data to a transmission destination through a communication circuit according to the present invention, comprises: a storage medium, onto which is stored an image data transfer program transferring the image data; and means, stored on the storage medium, for transmitting the image data to the transmission destination indicated by transfer data corresponding to the image data, based on occurrence that the image data is specified.

### BRIEF DESCRIPTION OF THE DRAWINGS

Fig. 1 is a drawing showing overall configuration of an image data transfer system according to a first embodiment of the present invention.
Fig. 2 is a block diagram showing the configuration of a transmission apparatus of an image data transmission apparatus according to the embodiment.
Fig. 3 is a flowchart showing the generation processing according to the embodiment.
Fig. 4 is a drawing showing the condition of storage of image data and transfer data in the image data transfer medium according to the embodiment.
Fig. 5 is a flowchart showing the, transfer processing in the transmission apparatus of the image data transmission apparatus according to the embodiment.
Fig. 6 and Fig. 7 are flowcharts showing the transfer processing in a receiving apparatus of the image data receiving apparatus according to the embodiment.
Fig. 8 is a block diagram showing the configuration of a transmission apparatus of an image data transmission apparatus according to a second embodiment of the present invention.
Fig. 9 is a flowchart showing the transfer processing in the transmission apparatus of the image data transmission apparatus according to the embodiment.
Fig. 10 is a drawing showing the configuration of an image data transfer system investigated by the present inventors.

### DETAILED DESCRIPTION OF THE PREFERRED EMBODIMENTS

Preferred embodiments of the present invention are described in detail below, with references being made to relevant accompanying drawings.

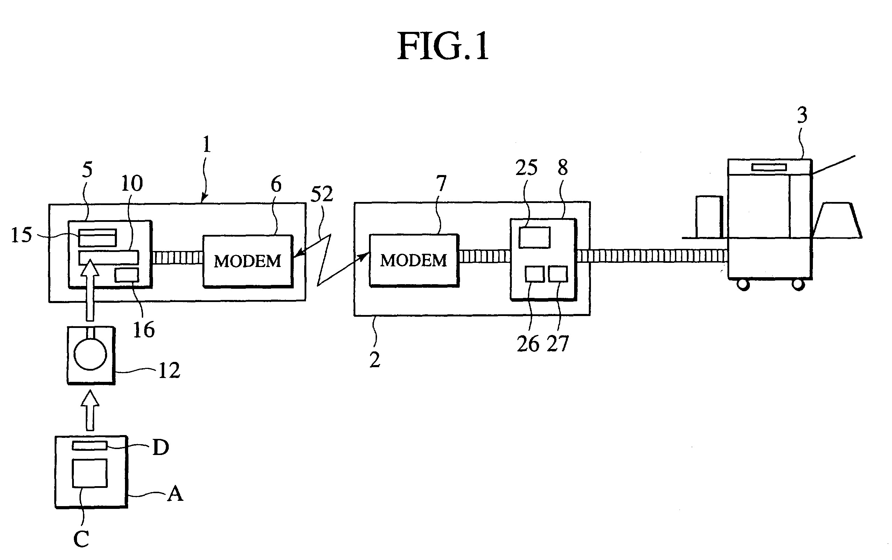

First, an image data transmission apparatus, image data receiving apparatus, an image data transfer medium, and a recording medium onto which is stored an image data transfer program, according to the first embodiment of the present invention, are described below, with reference made to Fig. 1 through Fig. 7.

Fig. 1 shows the overall system configuration of a system having an image data transmission apparatus and an Image data receiving apparatus according to the embodiment.

In Fig. 1 an image data transmission apparatus 1 is disposed in a remote shop location. An image data receiving apparatus 2 and a printer 3 are disposed at a printing location that is at a distance from the remote shop.

The image data transmission apparatus 1 is structured by a transmission apparatus 5 and modem 6, and the image data receiving apparatus 2 is structured by a modem 7 and receiving apparatus 8.

The receiving apparatus 8 has a printer controller function of converting image data received by the modem 7 to data that can be printed by the printer 3, and has a CPU 25 and required memories 26 and 27 or the like.

The image data transmission apparatus 1 can be alternately formed integrally by the transmission apparatus 5 and the modem 6, and the image data receiving apparatus 2 can alternately be built into the printer 3.

The transmission apparatus 5 is implemented by computer hardware, such as by a CPU 15 and a drive apparatus 10 for reading/writing data from/onto a medium such as a floppy disk. The image data transfer program is priorly stored into a memory corresponding to the storage medium onto which is stored the image data transfer program in the transmission apparatus 5, this being, more specifically, the ROM 16.

A storage medium (the image data transfer medium) 12 onto which are stored image data and transfer data is installable and removable in the drive apparatus 10. The image data and transfer data stored on this image data transfer medium 12 is pregenerated by an image data generation apparatus A, such as a personal computer provided externally.

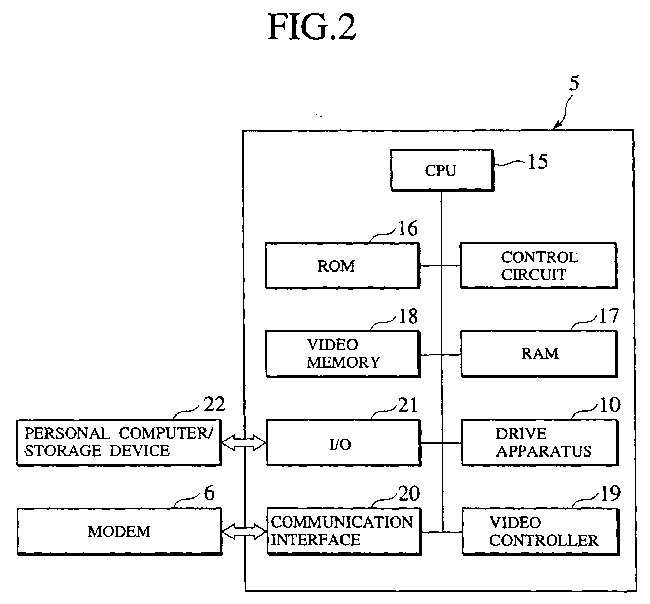

Fig. 2 is a block diagram showing the details of the internal configuration of the transmission apparatus 5.

The transmission apparatus 5 has a CPU 15 and a ROM 16 and the like, and is provided with, as necessary, a control circuit, a RAM 17, a video memory 18, a video controller 19, a communication interface 20, and an I/O controller 21.

The CPU 15 executes transfer processing in accordance with a transfer program that is stored in the ROM 16. This transfer processing is the readout of image data and transfer data from an image data transfer medium 12 installed in a drive apparatus 12 such as a floppy disk drive, after which the transmission to a destination noted in the transfer data is started, and a series of operations including transmission processing and also receiving procession as detailed later.

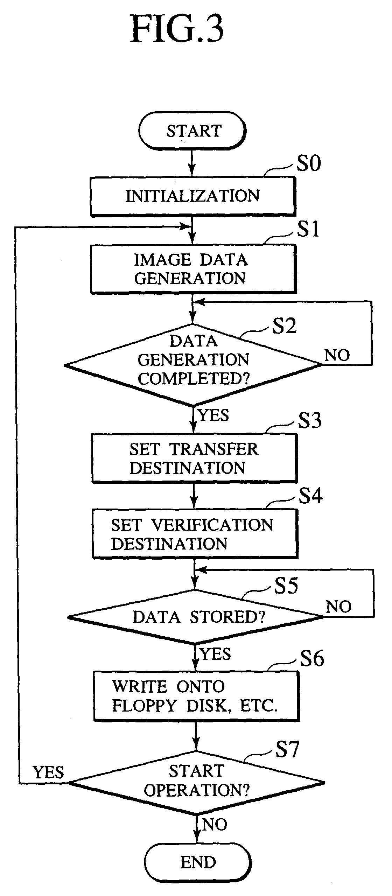

Before describing the actual transfer processing, the processing to generate data stored on the Image data transfer medium 12 executed by the CPU C of the data generation apparatus A is described below, with reference to the flowchart of Fig. 3.

The image data generation apparatus A that generates data on the image data transfer medium 12 is implemented by a computer apparatus having a CPU C. When the keyboard or mouse of a computer apparatus or the like is operated, image data and transfer data is input to the image data transfer medium 12.

In Fig. 3, when the power supply of the image data generation apparatus A is set to on, this series of operations is started.

When the initialization for this image data generation is completed (step S0), image data is generated (step S1).

When the image data generation is completed (step S2), the transfer data generation process is begun (step S3 and thereafter).

In the process of generating transfer data, the destination data as the transmission destination is first set (step S3). For example, the telephone number and the e-mail address of the printing location are set.

Next, if verification of completion is required, the notification destination (completion verification destination) for completion verification is set (step S4). This is the verification destination data for the sender of the image data. For example, this is the setting of the telephone number (or fax number) and the e-mail address or the like of the original sender.

When verification is made that the set data has been stored (step S5), this image data and transfer data are written onto an image data transfer medium 12, such as a floppy disk, by the drive apparatus D (step S6). After that, information that generates a signal for controlling the power supply of the image data transmission apparatus 1 at the end of transmission can be either automatically or manually written.

It will be understood, that even after writing, it is possible to shift to the beginning (step S1) of processing or to perform generation of image data, for example (step S7).

If image data is not to be generated anew the processing is completed.

As described above, the image data and transfer data are associated with one another in a one-to-one relationship, and are stored on the image data transfer medium 12.

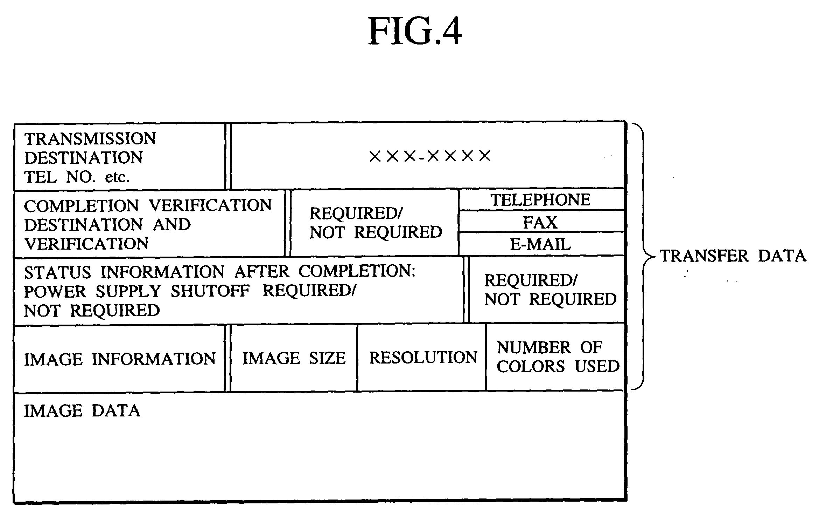

Fig. 4 is a drawing which shows the condition of storage of the image data and transfer data recorded on the image data transfer medium.

As shown in Fig. 4, image data and transfer data are stored in separate storage areas.

Transfer data includes the transmission destination telephone number or the like, the completion verification destination, the status information at the completion of transmission by the image data transmission apparatus 1, and image Information contents.

Items of the completion verification destination include whether or not transmission completion verification is to be made, and details of the notification destination (for example, the telephone number, fax number, or e-mail address of the shop).

The items for the status at the completion of the transmission by the image data transmission apparatus 1 include whether or not the power supply is to be switched off at the completion of transmission, as status information at the end of the transmission. It will be understood that, if necessary, it is also possible to store information with regard to whether or not the power supply of the image data transmission apparatus 1 is to be automatically switched off at the end of transmission.

The image information item includes the image size, the image resolution, the number of colors used, and other image-related information.

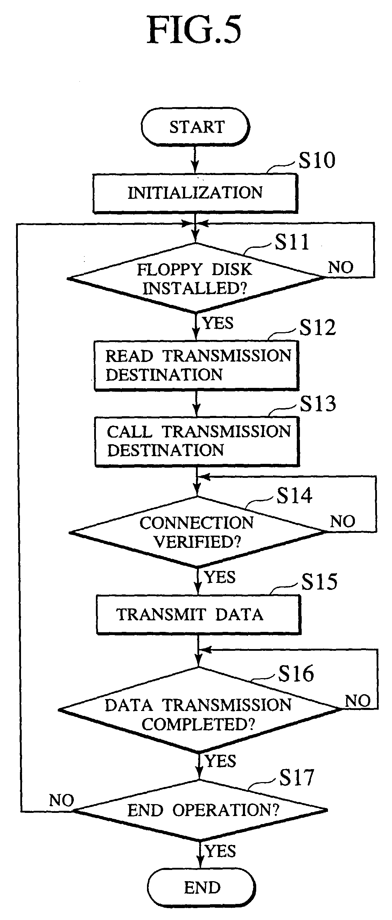

The transfer processing in the image data transmission apparatus 1, that is, the transmission processing as indicated by a transmission flowchart, is shown in Fig. 5. This processing is executed by the CPU 15 of the transmission apparatus 5.

In Fig. 5, when the power supply of the image data transmission apparatus 1 is switched on, this series of transfer processing is begun.

First, after initialization for transfer processing is completed (step S10), the CPU 15 goes into the condition in which it waits for the installation of an image data transfer medium 12 into drive apparatus 10 (step S11). In this embodiment, the installation of the image data transfer medium 12 specifies the image data stored thereon so that such specified image data is surely transmitted to its destination.

Next, when image data transfer medium 12 is installed (YES at step S11), at first the destination data is read from the transfer data (step S12).Typically the transmission destination data is set as a telephone number.

Then, the CPU 15 causes that telephone number to be dialed by the modem 6, thereby calling the modem 7 of the destination, which is the printing location (step S13).

Next, the transmitting and receiving modems 6 and 7 verify that a connection has been made (YES at step S14), at which point transmission of image data begins (step S15). When this occurs, the CPU 15 transmits image information included in the transfer data and, if a completion verification destination had been stored, reads and sends this as well.

Even after completion of image data transmission (YES at step S16), it is possible to shift to the first processing step (step S11), and transfer can be performed once again (NO at step S17).

When it is judged that this operation has been completed (YES at step S17), the series of transmission processing is ended. At this point, if the power supply setting is required at completion, the power supply of the image data transmission apparatus 1 is automatically switched off.

As noted above, by installing an image data transfer medium 12 into the image data transmission apparatus 1, image data is easily and reliably transmitted to the desired transmission destination.

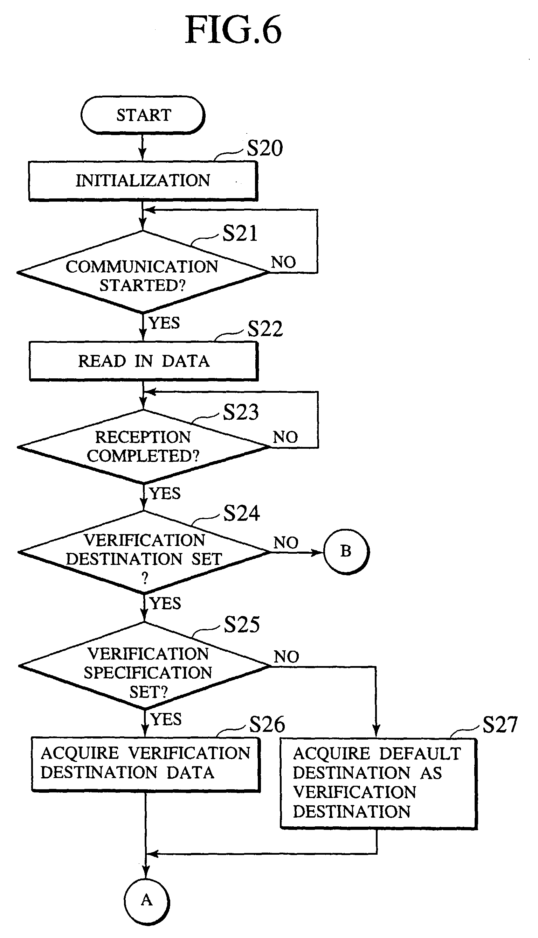

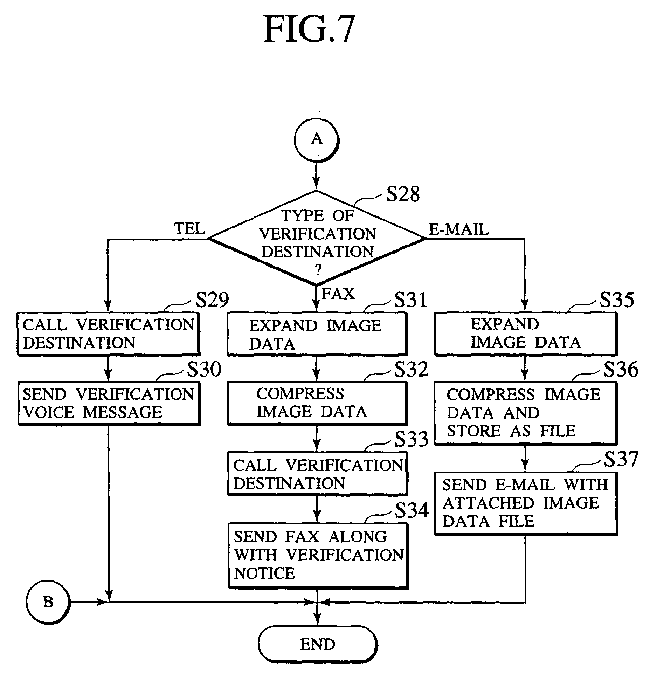

Next, transfer processing in the image data receiving apparatus 2, that is, receiving processing, is shown in the flowcharts of Fig. 6 and Fig. 7. This processing is executed by the CPU 25 of the receiving apparatus 8.

In Fig. 6 and Fig. 7, first the power supply of the image data receiving apparatus 2 is switched on, which starts a series of transfer processing.

First, after execution of initialization for transfer processing (step S20), the CPU 25 goes into the condition in which it waits for reception of image data (step S21).

Then, when the modem 7 receives a call, and a connection is completed with respect to the transmitting side 6, so that communication starts (YES at step S21), transmitted transfer data and image data is read into a memory 26 of the receiving apparatus 8 (step S22).

Next, when this data reception is completed, (YES at step 23), the, CPU 25 separates the image data and the transfer data that had been stored in the memory 26.

Then, judgment is made as to whether or not the transfer data includes the setting of a completion verification destination (step S24). If there is no completion verification destination set (NO at step S24), this receiving processing is ended.

If, however, there had been a completion verification destination setting (YES at step S24), next judgment is made as to whether or not the contents of this verification destination have been specified (step S25).

In the case in which there is a verification destination specification (YES at step S25), the data contents of this verification destination are acquired (step S26).If there is no verification destination specified (NO at step S25), verification destination data is read out as the default destination priorly set in the memory 27 of the receiving apparatus 8, based on information about the transmitter acquired during receiving processing, such as the telephone number (step S27).

At this point, the data contents of the completion verification destination thus acquired are the telephone number, fax number, or e-mail address or the like of the shop that did the transmission.

If the completion verification destination is a telephone (i.e., TEL at step S28), a call is made to the verification destination shop from the modem 7 (step S29).Then, transmission is made of reception verification by a preset voice message (step S30), thereby completing this receiving processing.

If the verification destination is a fax machine (FAX at step S28), received image data is expanded (step S31), and this image data is compressed to a predetermined size for transmission (step S32). Then, the fax machine at the verification destination shop is called from the modem 7, (step S33), and the compressed image data is transmitted along with a pre-established text as verification notice (step S34), thereby completing this receiving processing.

If the verification destination is an e-mail address (E-MAIL at step S28), received image data is expanded (step S35), and this image data is stored into the memory 26 in the prescribed file format after compression to a predetermined size for transmission (step S36). Then, a pre-established verification text e-mail as verification notice with a compressed image file attached is sent to the verification destination e-mail address (step S37), thereby completing this receiving processing.

When this series of receiving processing is completed, the CPU 25 of the receiving apparatus 8 expands the received image data (if not expanded), generates page data suitable for the printer 3, and stores this into memory 27. This data is saved even if the power supply of the image data receiving apparatus 2 is switched off, after which a user can instruct the transmission of the data to the printer 3 for printing thereby.

In an image data transmission apparatus according to the above-described embodiment, the configuration is one in which image data specifications are received and corresponding transfer data is used as the basis for transfer of the image data to a transmission destination, thereby enabling simple and reliable transmission of image data without the need for transfer settings.

When an image data transfer medium onto which is stored image data is installed, it is possible to transfer image data automatically to a transmission destination indicated by transfer data corresponding to this image data, the result being that it is possible for even a person unfamiliar with the apparatus to transfer image data to the desired transmission destination by merely installing a medium into the apparatus.

If transfer data including data indicating power supply shutoff required is set, even if the operator does not operate the apparatus so as to switch the power supply of the transmission apparatus to off at the completion of data transfer, it is possible to switch the power supply of the apparatus off after image data transmission, thereby enabling automatic execution of apparatus operation after a transfer operation.

According to an image data transfer medium of this embodiment, since it includes image data and transfer data corresponding thereto such that the image data and transfer data are associated with one another as a pair, the image data can be sent to the transmission destination showed by the transfer data only by installing this medium to the transmission apparatus.

Additionally, because transfer data includes completion verification destination information, it is possible at the transmission destination to send a completion verification to the sender, thereby enabling easy and reliable confirmation after reception.

Further, by adding information for switching off the power supply of the transmission apparatus to the transfer data, it is possible to switch off the power supply of the transmission apparatus after image data transmission, thereby simplifying the operation of the apparatus.

According to an image data receiving apparatus of this embodiment, in a case in which the transfer data includes completion verification destination information, because the configuration is one which notifies the sender of the reception, It is possible to execute verification processing after image data reception, without operating the receiving apparatus.

When the above is done, if simplified image data from the received image data is returned, it is also possible to facilitate the verification operation at the sender of the image data.

According to a storage medium onto which is stored an image data transfer program according to this embodiment, the transmission processing for image data in the transmission apparatus can be executed so as to send transfer data according to a prescribed procedure, thereby enabling simple transfer of image data, even using a general-purpose computer, by simply executing the transfer program.

Furthermore, according to the above-noted configuration, the input of image data to the image data transmission apparatus 1 is performed by reading from the image data transfer medium 12. The present invention Is not, however, restricted in this manner, and as shown in Fig. 2, it is possible to connect and external personal computer or storage device indicated by the reference numeral 2 to the transmission apparatus 5, and to directly input the generated image data.

And also, although this embodiments indicates the image data transfer medium 12 as a floppy disk, it will be understood that the present invention is not restricted in this manner, and can make use of such memory media as CD-R, MO disk, DVD, magnetic tape, and semiconductor memory.

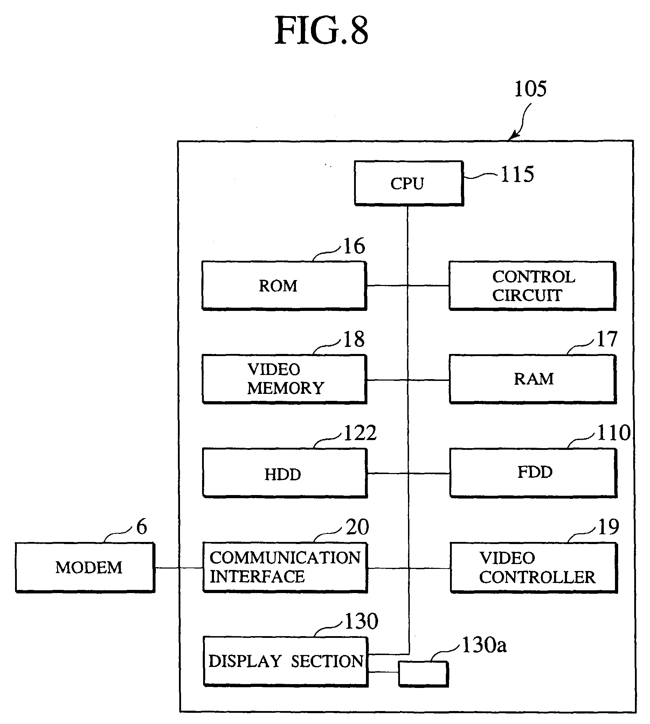

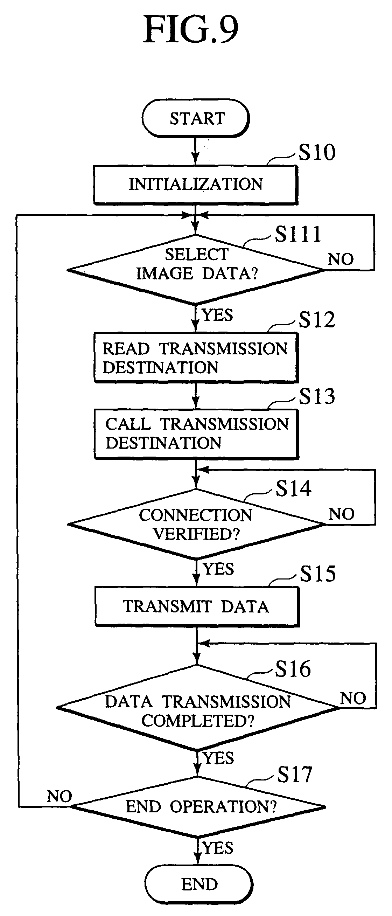

Next, a second embodiment of the present invention is described below, with references being made to Fig. 8 and Fig. 9.

Fig. 8 is a block diagram showing the configuration of a transmission apparatus 105 according to this embodiment.

In this embodiment, the transmission apparatus 105 has substantially the same configuration as described with regard to the first embodiment, corresponding elements of which are assigned the same reference numerals and are not explicitly described herein.

In Fig. 8, CPU 115 controls the overall operation of the transmission apparatus 105 implemented by a personal computer or the like.

The symbol HDD 122 indicates a hard disk drive, which is capable of reading and writing not only basic software for operating the personal computer as the transmission apparatus 105, but also for storing an image generation program as described with regards to the first embodiment, image data and transfer data pairs as described with regard to the first embodiment, and a program for performing image data transmission processing, to be described below.

The HDD 122 is capable of recording a plurality of image data and transfer data pairs, in which image data is associated with corresponding transfer data, the data structure being such that the transfer data corresponding to a given image data is uniquely defined.

It is possible to implement the above-noted association by assigning a common number to corresponding image data and transfer data, for example.

The symbol FDD 110 denotes a floppy disk drive, similar to the drive apparatus 10 in the first embodiment, this being capable of reading In pairs of data consisting of image data and transfer data. If required, the read-in data is stored onto HDD 122.

The display section 130 is implemented by a CRT, a liquid-crystal display or the like, and an operating section 130a such as a keyboard or a mouse serves as a man-machine Interface.

Data generation processing in this embodiment is basically the same as described already with regard to Fig. 3, the only difference being that the data write destination at step S6 is the HDD 122.

Fig. 9 is the flowchart showing the image data transfer processing, that is, transmission processing in this embodiment.

With the exception of the difference in step S111, the transmission processing flowchart for this embodiment is the same as described with regard to Fig. 5.

More specifically, in the condition in which the transmission apparatus 105 power supply is switched on, if the image transmission processing program is launched, a list of image data stored on the HDD 122 is displayed on the display section 130.

Then, if displayed image data is selected using the operating section 130a, the selected image data and corresponding transfer data are read in as a pair (YES at step S111).

Subsequent processing is the same as in steps S12 through S17 in Fig. 5.

As described above, in this embodiment, a personal computer having an HDD 122 and a display section 130 or the like is used as the Image data transmission apparatus 105. With this configuration, not only image data stored on floppy disk, but also image data stored on a hard disk can be selected in an image transmission program, enabling automatic transmission of the image data to a stored transmission destination, thereby further Increasing the degree of freedom in processing, without sacrificing simplicity of operation.

Because an application program running on a personal computer is used to implement the transmission apparatus 105, data generation processing is further simplified, without the need to provide a separate personal computer for data generation.

In the above-described embodiment of the present invention, the description was for the example of using a modem connected to a general public communication circuit to perform communication. It will be understood, however, that the present Invention can be applied as well using an ISDN line or a leased line. Additionally, the present invention is usable not only with cable transmission, but also can be implemented using a radio communication circuit.

Although the invention has been described above by reference to certain embodiments of the invention, the invention is not limited to the embodiments described above. Modifications and variations of the embodiments described above will occur to those skilled in the art, In light of the teachings. The scope of the invention is defined with reference to the following claims.

## Claims

1. An image data transmission apparatus transmitting image data to a transmission destination through a communication circuit, comprising:
a transmission section transmitting the image data; and
a controller performing control of the transmission section so that the image data is transferred to the transmission destination indicated by a transfer data corresponding to the image data, based on occurrence that the image data is specified.

2. An image data transmission apparatus according to claim 1, wherein an external storage section storing a plurality of image data and a selection section selecting a desired image data from the plurality of image data are provided, and the image data is specified by a selection at the selection section.

3. An image data transmission apparatus according to claim 2, wherein the selection section has a display section displaying information with regard to the plurality of image data.

4. An image data transmission apparatus according to claim 1, wherein a storage medium onto which is stored the image data is installable and removable, and the image data is specified by detection of installation of the storage medium.

5. An image data transmission apparatus according to claim 1, wherein an external device is connected to the image data transmission apparatus, and the image data is provided from the external device.

6. An image data transmission apparatus according to claim 1, wherein the transfer data includes information with regard to a verification destination after completion of a transfer of the image data, a status of the image data transmission apparatus after the completion of the transfer of the image data, or the image data.

7. An image data transmission apparatus transmitting image data to a transmission destination through a communication circuit, comprising:
a reading section, in which an image data transfer medium is installable and removable, reading contents of the image data transfer medium, the contents thereof being stored on the image data transfer medium and including the image data and transfer data corresponding thereto, and the image data and the transfer data corresponding thereto being associated with one another as a pair;
a transmission section transmitting the image data; and
a controller that, by detecting that the image data transfer medium is installed in the reading section, performs control so that the image data is transferred to the transmission destination indicated by the transfer data corresponding to the image data.

8. An image data transmission apparatus according to claim 7, wherein when the transfer data includes information that a power supply of the image data transmission apparatus Is to be switched off at completion of image data transfer, the power supply of the image data transmission apparatus is switched off at the completion of image data transfer.

9. An image transmission apparatus according to claim 8, wherein the transfer data further includes information with regard to a verification destination at the completion of the image data transfer, or information with regard to the image data.

10. An image data transfer medium used for image data transfer to a transmission destination through a communication circuit from an image data transmission apparatus, comprising:
a data structure stored on the image data transfer medium and including the image data and transfer data corresponding thereto, the image data and the transfer data being associated with one another as a pair.

11. An image data transfer medium according to claim 10, wherein the image data transfer medium is installable and removable in the Image data transmission apparatus.

12. An image data transfer medium according to claim 10, wherein the transfer data includes information with regard to whether or not a power supply of the image data transmission apparatus is to be switched off at completion of the image data transfer.

13. An image data transfer medium according to claim 12, wherein the transfer data further includes information with regard to a verification destination at the completion of the image data transfer, or information with regard to the image data.

14. An image data receiving apparatus receiving image data from an image data transmission apparatus through a communication circuit, comprising:
a receiving section receiving the image data;
a controller which, when a verification destination is included in a transfer data corresponding to the image data, issues notification to the verification destination after reception of the image data by the receiving section, thereby giving reception verification.

15. An image receiving apparatus according to claim 14, wherein the receiving section further has a transmission function, and the controller performs control of the receiving section so that the notification of the reception verification is issued through the receiving section.

16. An image receiving apparatus according to claim 14, wherein the controller sends a simplified Image data based on the image data received by the receiving section when the notification of the reception verification is issued.

17. An image receiving apparatus according to claim 14, wherein the transfer data further includes information with regard to a status of the image data transmission apparatus after the completion of the transfer of the image data, or information with regard to the image data.

18. A computer program product transferring image data to a transmission destination through a communication circuit, comprising:
a storage medium, onto which is stored an image data transfer program transferring the image data; and
means, stored on the storage medium, for transmitting the image data to the transmission destination indicated by transfer data corresponding to the image data, based on occurrence that the image data is specified.

19. A computer program product according to claim 18, wherein the storage medium has a hard disk drive of an image transfer transmission apparatus transmitting the image data to the transmission destination through the communication circuit.
